(19) Europäisches Patentamt
European Patent Office
Office européen des brevets

(11) **EP 4 230 491 B1**

(12) **EUROPEAN PATENT SPECIFICATION**

(45) Date of publication and mention
of the grant of the patent:
**22.04.2026 Bulletin 2026/17**

(21) Application number: **22156944.5**

(22) Date of filing: **16.02.2022**

(51) International Patent Classification (IPC):
**B60W 30/12** *(2020.01)*   **B60W 50/14** *(2020.01)*
**B60W 40/06** *(2012.01)*   B60W 30/02 *(2012.01)*
**B60W 30/14** *(2006.01)*   **B60W 30/16** *(2020.01)*
**B60W 30/18** *(2012.01)*

(52) Cooperative Patent Classification (CPC):
**B60W 30/12; B60W 40/06; B60W 50/14;**
B60W 30/02; B60W 30/143; B60W 30/16;
B60W 30/18163; B60W 2050/146; B60W 2520/10;
B60W 2530/13; B60W 2540/049; B60W 2552/53;
B60W 2555/20; B60W 2556/45; B60W 2556/50

(54) **A COMPUTER-IMPLEMENTED METHOD FOR PROVIDING A FUNCTION RECOMMENDATION IN A VEHICLE, A VEHICLE AND A SYSTEM FOR IMPLEMENTING THE METHOD**

COMPUTERIMPLEMENTIERTES VERFAHREN ZUR BEREITSTELLUNG EINER FUNKTIONSEMPFEHLUNG IN EINEM FAHRZEUG, FAHRZEUG UND SYSTEM ZUR DURCHFÜHRUNG DES VERFAHRENS

PROCÉDÉ MIS EN OEUVRE PAR ORDINATEUR POUR FOURNIR UNE RECOMMANDATION DE FONCTION DANS UN VÉHICULE, VÉHICULE ET SYSTÈME DE MISE EN OEUVRE DU PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.08.2023 Bulletin 2023/34**

(73) Proprietor: **Bayerische Motoren Werke Aktiengesellschaft**
**80809 München (DE)**

(72) Inventors:
• **Homola, Daniel**
**80335 München (DE)**
• **Micus, Christian**
**82008 Unterhaching (DE)**

(56) References cited:
WO-A1-2020/160799   DE-A1- 102014 221 132
DE-A1- 102018 206 557   FR-A1- 3 105 142
US-A1- 2017 151 945

**Description**

The present invention relates to the field of function recommendation in vehicles.

Modern vehicles have a wide range of vehicle functions that generally aim to increase safety and driving comfort for the driver as well as the vehicle occupants. In particular, various driver-assistance systems (ADAS) exist that are designed to prevent accidents by vehicle collisions or to assist the driver in specific situations another way.

For example, a lane keeping system (LKS) is a system that, first, warns the driver if vehicle sensors detect that the vehicle begins to move out of its lane. Typically, the warning is signaled acoustically and/or optically. If the driver does not correct the lane by appropriate countersteering, the LKS automatically initiates steps to prevent the vehicle from moving out of its lane, e.g., by controlling the steering of the vehicle. This way, the LKS aims to prevent collisions. In case of LKS, the vehicle sensors may include a video sensor, e.g., a video camera configured to detect lane markings.

As certain vehicle functions may only be available in particular driving situations, these functions are deactivated by default and need to be activated or set-up manually by the driver. However, drivers may forget about the availability of the function while driving or are simply overwhelmed with the decision due to the plurality of functions in modern vehicles. This may lead to the problem that certain functions are rarely used by drivers, even though drivers would benefit from activating the functions. From a safety point of view, it is also desirable to maximize the usage rate of ADAS.

For this reason, concepts are known to provide the driver with a proactive function recommendation. That is, in a specific driving situation, the driver is encouraged automatically by the vehicle to activate a certain function. In particular, the vehicle may verify that the requirements for a certain function are satisfied and the activated function appears to be a supportive experience for the driver. Then, a notification may be displayed on a head-up display of the vehicle, encouraging the driver to activate the function. In response to the function recommendation, the driver may activate the function or decide to leave the function deactivated.

For example, a recommendation for the lane keeping system of a vehicle may be provided when the following requirements are satisfied:

- the driving speed is in a range of 60 to 140 km/h; and
- no turn signal is set; and
- lane markings have been detected.

Therefore, to decide about a function recommendation, the current driving situation is considered at a high level of abstraction and is evaluated with respect to requirements that are pre-determined by vehicle developers. Such requirements are called static requirements in the following.

Often, the static requirements are chosen in a rather strict manner to avoid inadequate function recommendations and to guarantee proper operation of the function. Another reason for restrictive function recommendation is that inappropriate function recommendations may lead to distraction and frustration of the driver.

US 2017/0151945 A1 describes an information processing device including circuitry configured to acquire, from vehicles having a lane keeping function, a use information of the lane keeping function during a travel, extract a region in which a use rate of the lane keeping function is low, on the basis of the use information, and transmit a notification information based on the use rate to a given vehicle having the lane keeping function.

FR 3 105 142 A1 describes a method of identifying a level of driving autonomy of an autonomous driving vehicle, the vehicle comprising a manual driving mode, an autonomous driving mode and at least one intermediate driving mode. The method identifies a driving mode of the vehicle, which is representative of the level of autonomy corresponding to a driving situation. The driving situation is determined as a function of at least one determined traffic characteristic and at least one vehicle characteristic.

WO 2020/160799 A1 describes a method for operating a driver assistance function of a vehicle, the method comprising: determining a position of the vehicle; providing map data of a road map; providing current and historical traffic data on the basis of the position; providing a list of driver assistance functions; determining whether a situation applies in which a driver assistance function from the list can be used, based on the position, the map data and the current and historical traffic data; if it has been determined that the situation applies, providing information for setting the driver assistance function to a driver of the vehicle.

DE 10 2014 221132 A1 describes a method for indicating the availability of a first, at least partially automatic, driving mode of a vehicle, and a second, non-automatic driving mode. In the method, it is detected whether the vehicle is in the first or the second driving mode. First environment data items from the environment of the vehicle are determined. If it has been detected that the vehicle is in the second driving mode, a start of a route section starting from which the first driving mode is available is predicted based on the first environment data items.

DE 10 2018 206557 A1 describes a computer-implemented method for assisting a user of a vehicle, in which it is determined whether one of vehicle functions supported by the vehicle and not yet used by the user is relevant to the user for the planned route, based on the following information: user profile information indicating vehicle functions already used by the user; vehicle information indicating vehicle functions supported by the vehicle; and information relating to a planned route of the user.

It is therefore an object of the present invention to provide a computer-implemented method for providing function recommendation in a vehicle. In particular, it is an object of the present invention to improve the function recommendation such that the recommended function is more likely to provide a supportive experience for the driver in the current driving situation. Moreover, it is an object of the present invention to provide a corresponding vehicle and a system to implement the method.

The objects of the present invention are solved by the computer-implemented methods of Claim 1, the computer-readable medium of Claim 6, the vehicle of Claim 7 and the system of Claim 9.

In particular, the object of the present invention is solved by a computer-implemented method for providing a function recommendation in a vehicle. The method comprises the following steps:

- loading a recommendation model;
- receiving context information acquired by using at least one sensor of the vehicle, the context information in particular comprising a geographical location of the vehicle;
- determining a function, in particular a vehicle function, using the context information and the recommendation model;
- providing a function recommendation associated with the function, in particular using a display and/or a voice assistant of the vehicle.

A core aspect of the present invention is that function recommendations are provided in a context-specific manner using a recommendation model and context information, rather than based on pre-determined criteria.

In particular, the recommendation model can be based on artificial intelligence, e.g., by comprising an artificial neural network.

In order to characterize the current driving situation and environmental parameters of the vehicle, the method comprises receiving context information that are acquired by using at least one sensor of the vehicle.

In the context of this application, the term context information relates to any set of information descriptive of the current driving situation and environment of the vehicle. In particular, the context information may comprise driving parameters of the vehicle (e.g., driving speed, standard deviation of driving speed, time expired since start of the trip, etc.) as well as environmental parameters (e.g., geographical location of the vehicle, a road property, outdoor temperature, etc.).

Using the recommendation model and the received context information, the method determines a function, in particular a vehicle function, to be recommended.

The term vehicle function relates, in the context of this application, to any function associated with operating or using the vehicle, in particular driver-assistance systems and comfort functions of the vehicle. In particular, the activated function vehicle function may lead to a supportive experience for the driver in the current situation, e.g., as driving becomes more convenient for the driver or the safety is increased.

The determining of the function may in particular include a database lookup, wherein the database provides functions that are basically available in the respective vehicle. The database may be stored on an on-board storage of the vehicle or provided by an external server. Moreover, determining of the function may include determining a ranking of functions.

After determining the function, the method provides a function recommendation associated with the function in the vehicle. This may, in particular, comprise displaying an activation incentive on a display of the vehicle, playing a notification sound using a vehicle speaker, etc.

This way, the method enables to identify and recommend a function that is likely to match the current driving situation and context, and therefore may outperform function recommendation based on static requirements. The function recommendation can be provided to the driver in a convenient way, using appropriate input and output devices of the vehicle. In particular, drivers are enabled to activate a recommended function without significant effort, causing him being distracted in road traffic. Generally, this improves usability and safety of the vehicle.

In at least one embodiment, the outcome of the described method will impact on / change the functionality of the vehicle. For example, after the function recommendation is provided, the vehicle will behave in a different manner, e.g. by immediately activating the recommended function and/or by responding differently to an input received by the vehicle (e.g. a voice signal, a gesture or the activation of a button).

The recommendation model classifies the context information as member of a first group or member of a second group with respect to a function. In particular, the first group can be associated with a supportive experience for the driver.

According to this, for any function under consideration, it can be checked whether the context information, representing the current driving situation, is classified as member of the first group or member of the second group. In the first case, activating the function in the current driving situation may lead to a supportive experience by the driver and the function is qualified as candidate for recommendation. This way, the determining of the function can be based on the classification of context information by the recommendation model.

The method comprises determining a road section based on the geographical location of the vehicle. In particular, the determining of the road section may comprise sending a request to an external server, the server providing a mapping between geographical locations and road sections. According to this, determining of the function further uses at least one key performance indicator of the determined road section. The at least one key performance indicator is a numerical value associated with a function and specific for a road section.

The key performance indicator is one of the following:

$$\text{activation ratio} = \text{n\_activation} / \text{n\_traversals};$$

$$\text{deactivation ratio} = \text{n\_deactivation} / \text{n\_activeTraversals}.$$

Moreover, a key performance indicator can be one of the following:

$$\text{function usage ratio} = \text{n\_activeTraversals} / \text{n\_traversals};$$

$$\text{first group ratio} = \text{n\_firstGroup} / \text{n\_activation},$$

with the following definitions:

| | |
|---|---|
| n_activation: | total number of function activations on road section; |
| n_deactivation: | total number of function deactivations on road section; |
| n_traversals: | total number of traversals of road section; |
| n_activeTraversals: | total number of traversals of the road section with activated function; |
| n_firstGroup: | total number of function activations associated with context information classified as member of a first group. |

The key performance indicators as defined above are numerical or statistical indicators for the usage of a function with respect to a certain road section. According to this, determining of the function is based further on key performance indicators, which take the geographical context of the vehicle (road section) into account. This way, the function recommendation can be further improved.

The recommendation model comprises at least one artificial neural network and/or uses at least one random forest model. Preferably, the recommendation model is trained by the training method described later in this description.

In particular, an artificial neural network is able to perform classification of unknown inputs. The quality of classification can be improved efficiently, for example by means of supervised learning methods. The learning method may adjust internal weights of the artificial neural network in order to minimize incorrect classifications of training datasets. This way, an artificial neural network is able to learn even complicated non-linear classification functions.

In one embodiment, the context information comprises at least one piece of information indicative of: a time and/or date, a driving speed, a road property, a weather condition, a number of passengers in the vehicle, a mileage of the vehicle, a time expired since start of the trip, a standard deviation of a driving speed.

The pieces of information mentioned above can be easily acquired by corresponding vehicle sensors and/or on-board computer systems of the vehicle. By using context information including these pieces of information, it is possible to precisely describe the situation where the vehicle is currently in. In particular, context information is not limited to internal parameters of the vehicle, but may also include the geographical position of the vehicle and/or weather information. This may crucially improve the quality of function recommendation, since these external parameters may be correlated to driver's preferences regarding the usage of certain functions.

In one embodiment, the function is a vehicle function of the vehicle and one of: cruise control, adaptive cruise control, lane keeping system, lane departure warning, lane change assistance, automatic parking, crosswind stabilization.

These functions are well suited for proactive function recommendations. Activation of these vehicle functions in a suitable driving situation can lead to a supportive experience for the driver and therefore improve the comfort of driving. Importantly, traffic safety may be increased this way since the activated functions may prevent vehicle collisions.

In one embodiment, providing the function recommendation comprises:

- displaying an activation incentive on a display of the vehicle;
- playing a sound on a speaker of the vehicle;
- using a voice assistant of the vehicle (100); and/or
- modifying programming of a control element such that operating the control element causes sending a control command for activating the function.

According to this embodiment, providing of the function recommendation is directly linked with actions in the vehicle that call the driver's attention to the recommended function and/or to facilitate activation of the recommended function.

The activation incentive may be a visual notice indicative of the recommended function, for example the text "Turn LKS on?". The activation incentive may be displayed on a display of the vehicle, for example, a head-up display or the display of the on-board computer.

In particular, the vehicle may comprise a programmable control element, for example, an "OK" control button at the steering wheel, such that pressing the control button triggers the action according to the programming. Now, if providing the function recommendation comprises modifying the programming of the control element as described above, the driver can activate the recommended function by pressing the control button.

According to this embodiment, usability of the vehicle is improved. Moreover, the driver's gaze is not distracted from the road, as it could be the case when he needs to find the control element associated with the recommended function on the dashboard of the vehicle.

In one embodiment, the method further comprises the step of:

- creating an event dataset comprising context information and event information;
- sending the event dataset to a server, in particular using a communication unit of the vehicle.

In particular, the context information may comprise the geographical location of the vehicle as well as further pieces of information as described above. The event information comprises a function, a binary value indicative of an activation or deactivation event of the function, and a timestamp associated with the activation or deactivation event.

For example, an event dataset may be indicative of:

- the event that the LKS is activated;
- the point of time of activation;
- the driving speed at time of activation.

According to this embodiment, statistical data about function usage can be collected in the vehicle and the corresponding event datasets can be sent to a server for further processing. In particular, the server may use the received event datasets to improve a recommendation model stored on the server as described in connection with the following embodiment.

The present disclosure further relates to a computer-implemented training method beyond the scope of the claims for training a recommendation model for function recommendation in a vehicle. The training method comprises:

- receiving a plurality of event datasets, each event dataset comprising context information and event information, wherein the event information comprises a function, a (binary) value indicative of an activation or deactivation event of the function, and a timestamp associated with the activation or deactivation event;
- generating training datasets using the event datasets, each training dataset comprising context information, a function, and an activation duration of the function;
- assigning a label to each training dataset, wherein the label classifies the training dataset as member of a first group or as member of a second group;
- performing a supervised learning of the recommendation model by using the training datasets and the associated labels.

According to this embodiment, the classification performed by the recommendation model can be improved by means of a supervised learning process.

As a first step of the training method, event datasets are received, wherein the event datasets are descriptive of contexts where an activation or deactivation of a function has occurred in a vehicle. In particular, the event datasets may be created in a vehicle and sent to a server as described in the previous embodiment. In particular, the server may adapted to store a recommendation model and to execute the training method.

In a next step, training datasets are generated on the basis of the received event datasets. Training datasets comprise, in addition to the context information and the function, an activation duration of the function. The activation duration of the function can be obtained from a pair of a first event dataset and a second event dataset, wherein the first event dataset is indicative of the activation time of a function in a vehicle and the second event dataset is indicative of the deactivation time of the function in the vehicle.

The generating of training datasets may also comprise assigning an identifier of a road section to a geographical location. In other words, the geographical locations, in particular GPS positions, from event datasets may be transferred to road section identifiers for the training datasets. This may produce training datasets of higher quality as road section identifier provide a reasonable abstraction of the precise geographical location of the vehicle.

In a further step, each training dataset is assigned a label, wherein the label classifies the training dataset as member of a first group or as member of a second group. The assigned label represents the desired classification (output) of the recommendation model with respect to the training dataset (input). In particular, a training dataset should be labelled as member of a first group if the training dataset represents a context where recommendation of the function appears desirable. Preferably, the labelling is performed automatically by means of a labelling algorithm, rather than manually.

The labelled training datasets are used to perform a supervised learning of the recommendation model. In particular, the training datasets together with the associated labels are input-output pairs that can be fed to a learning algorithm. The learning algorithm may adjust internal parameters of the recommendation model (for example, weights of an artificial neural network) in order to minimize incorrect classifications for the set of training datasets.

In one embodiment, the training method is characterized in that a training dataset is assigned a label classifying the training dataset as member of the first group if the activation duration exceeds a threshold duration. The threshold duration may be specific for a function. In particular, the threshold duration can be less than 15 minutes or less than 10 minutes or less than 5 minutes, preferably 3 minutes.

This embodiment is motivated by the assumption that if a function stays activated for at least a minimum duration, most likely the driver appreciates a supportive experience due to the function. In contrast, a short activation duration may indicate that the driver is dissatisfied with the function in the respective context.

From another perspective, according to this embodiment, the recommendation model is trained to predict whether activation of a function in a given context will lead to a supportive experience for a forthcoming time interval.

According to this embodiment, the labelling of training datasets can be performed efficiently by means of a labelling algorithm. The criterion, whether the activation duration exceeds the threshold duration, can be verified very efficiently.

Alternatively to the supervised learning process described above, a recommendation model for function recommendation in a vehicle may be trained by means of an unsupervised learning process. Based on event datasets, the set of all context information associated with a function activation, called activation contexts, can be determined. The recommendation model can be trained to decide whether a given context information is similar to an activation context. In this case, activation of the function can be recommended. With an unsupervised learning process, the necessity to label all training datasets is avoided.

The object of the present invention is further solved by a computer readable medium. The computer readable medium stores instructions that when executed by at least one processor cause the at least one processor to implement a method as described above.

Regarding the computer readable medium, similar or identical benefits result as described in connection with the above methods.

The object of the present invention is further solved by a vehicle comprising:

- at least one sensor, in particular a position determination unit, in particular a GPS module;
- a computer readable medium as described above;
- a vehicle computing unit.

The vehicle computing unit is adapted to

a) acquire at least one signal of the at least one sensor;
b) determine context information based on the acquired signal for feeding to the recommendation model;
c) receive a recommendation, the recommendation indicating a function to be used and being determined based on an output of the recommendation model, the recommendation model in particular being stored on a server;
d) use the recommendation to adapt the functionality of the vehicle.

The vehicle as described above is preferably configured to provide function recommendations in an offline or online mode. In the offline mode, the vehicle has a local copy of the recommendation model and a vehicle communication unit is configured to implement the method using vehicle components. In the online mode, the determining of the function is performed by an external server providing the recommendation model; the vehicle sends context information as a request to the server and receives the determined function, wherein sending and receiving is performed using a communication unit of the vehicle.

In the offline mode, the vehicle has a large degree of autonomy, in particular, it is not necessary that the vehicle can establish a (wireless) connection to the server. The online mode, on the other hand, enables that the vehicle can access a latest version of the recommendation model without the need of a complete download. This can save resources of the communication channel between vehicle and server.

In one embodiment, the vehicle further comprises a programmable control element, in particular a control button, and the vehicle computing unit is adapted to modify programming of the control element such that operating the control element causes sending a control command for activating the function.

Moreover, the object of the present invention is solved by a system for providing a function recommendation in a vehicle. The system comprises:

- a server configured to store a recommendation model and/or to train the recommendation model, in particular according to the training method described above; and
- a vehicle as described above, wherein a communication unit of the vehicle is configured to

    a) receive the recommendation model and/or a function from the server and/or
    b) to send context information and/or event datasets to the server.

Regarding the vehicle and the system, similar or identical benefits result as described in connection with the above methods.

Further embodiments are indicated by the dependent claims.

It is explicitly pointed out that all described aspects can be combined with each other as desired. In particular, the aspects described with respect to the methods are also disclosed for the vehicle and/or the system and vice versa.

In the following, embodiments of the invention are described with respect to the figures, wherein

Fig. 1A          shows a system according to one embodiment, the system comprising a vehicle and a server;

Fig. 1B          shows the interior of the vehicle from Fig. 1B;

Fig. 2           shows a schematic view of a method according to one embodiment performed by the system from Fig. 1A;

Figs. 3A and 3B  show two situations in which a method according to one embodiment provides different function recommendations;

Fig. 4A          shows event datasets according to one embodiment;

Fig. 4B          shows training datasets corresponding to the datasets from the embodiment according to Figure 4A and corresponding labels.

In the following description, same reference signs are used for same parts and parts with the same effect.

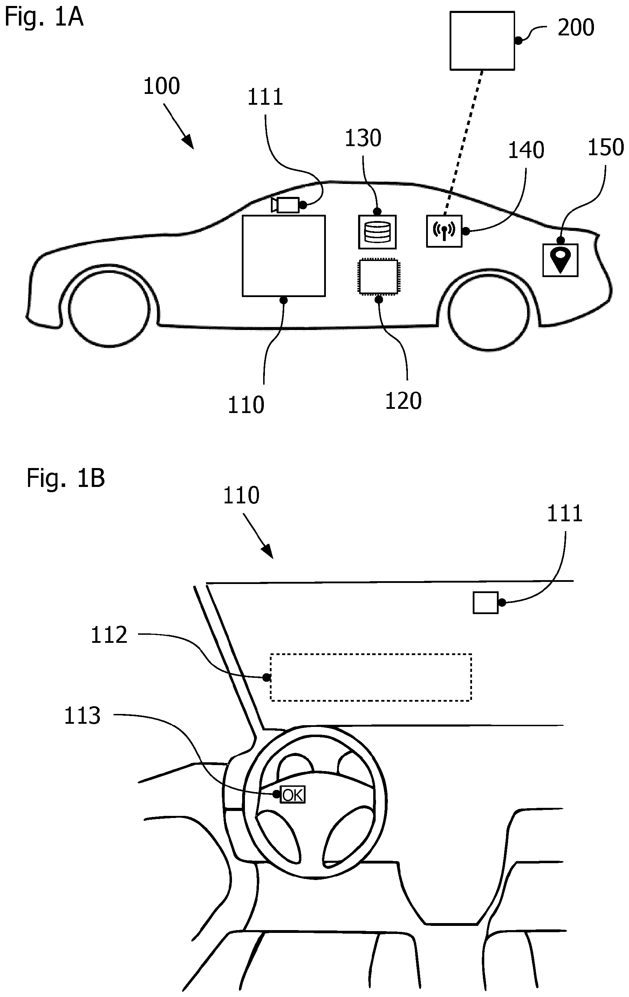

Figure 1A shows a system according to one embodiment of the present invention. In particular, Figure 1A shows the main components of the vehicle 100 and the server 200. The vehicle 100 has a video camera 111 configured to provide sensor signals for the lane assist system of the vehicle 100. Moreover, the vehicle 100 has a computing unit 120 and a storage unit 130. The computing unit 120 has a processor and the storage unit 130 stores instructions that, when executed by the processor, cause the processor to implement a method for providing a function recommendation as described above. For communicating with the server 200, the vehicle comprises a communication unit 140 (the communication link is represented by the dashed line in Figure 1A). For acquiring the current position of the vehicle 100, the vehicle 100 further comprises a GPS module 150. The interior 110 of the vehicle 100 is explained in more detail using Figure 1B.

As depicted in Figure 1B, the vehicle 100 has a head-up display 112, enabling the driver to read the provided information without having to take his eyes off the road. The video camera 111 for the lane assist system is arranged in the interior mirror of the vehicle 100 and directed to the road, such that lane markings can be detected by the video camera 111. Moreover, a programmable control button 113 is located on the steering wheel of the vehicle 100. By pressing the control button 113, one or more control commands are sent to a vehicle bus, according to the programming. In particular, the control button 113 enables the driver to activate a vehicle function that has been recommended recently.

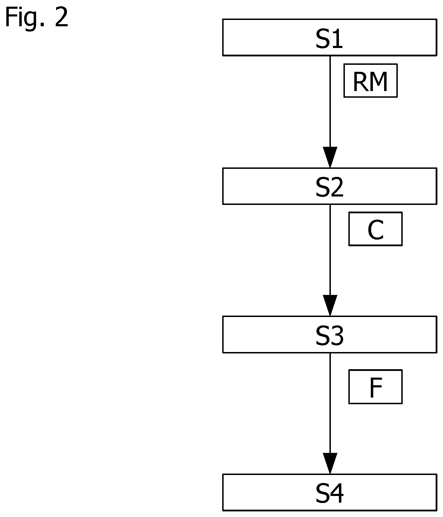

Figure 2 shows a schematic view of a method for providing function recommendation in the vehicle 100 performed by the system from Figure 1A. According to this embodiment, the vehicle operates in the offline mode, that is, the vehicle has a local copy of the recommendation model and the method steps are performed by components of the vehicle 100.

In step S1, the vehicle 100 receives the recommendation model RM from the server 200 by means of the communication unit 140 and loads the recommendation model RM into the storage unit 130. In particular, step S1 may be performed as initial setup step and not immediately before the determining of the function according to step S2.

In step S2, the vehicle computing unit 120 receives context information C. For this purpose, the vehicle computing unit 120 acquires the sensor data of the video camera 111, the geographical position provided by the GPS module 150, and the current time from a head unit (not shown) of the vehicle 100. Specifically, the context information C may comprise the following information:

- lane markings detected: yes;
- GPS position: 48.2255, 11.6316;
- current time: 12:57pm.

In step S3, a request to the recommendation model RM is sent, the request comprising the context information C. According to the response of the recommendation model, the function F is determined as function to be recommended. In particular, the function F may be the lane keeping system of the vehicle 100.

In step S4, a function recommendation associated with the function F is provided in the vehicle. For this purpose, the vehicle computing unit 120 sends a control command over a vehicle bus that causes the head-up display 112 to display the text "LKS recommended. Press OK to activate.". In addition, the vehicle computing unit 120 causes modifying programming of the control button 113 on the steering wheel such that pressing the control button 113 causes sending a control command for activating the function F, i.e., the lane keeping system. This way, the driver is provided with the recommendation for activating the LKS and the driver obtains a convenient method to trigger activation of the LKS in the vehicle 100.

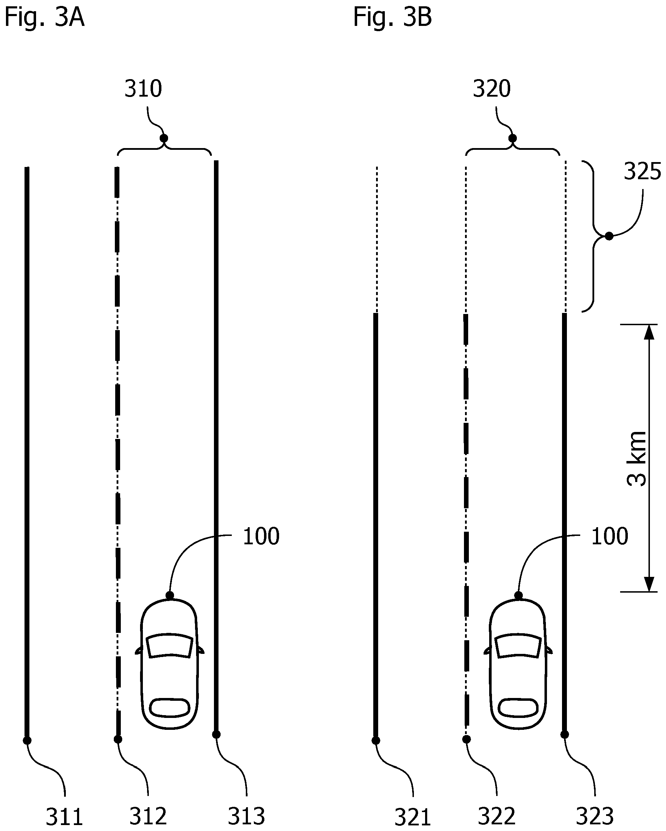

In Figures 3A to 3B, two situations are depicted, wherein a method according to one embodiment provides different function recommendations.

Figure 3A shows a two-lane road with lane markings 311, 312, and 313, the road being located at a first geographical location. The vehicle 100 drives on the right lane 310, which is limited by lane markings 312 and 313. According to this embodiment, it is assumed that the method for providing function recommendation recommends activating the LKS in light of the respective context information. In particular, the video camera 111 of the vehicle 100 detects the line markings 312 and 313 (similar as described in connection with Figure 2).

Figure 3B shows a setting similar to Figure 3A, however, located at a second geographical location. On the lane 320, a road construction site 325 is located in a distance of 3 km ahead the vehicle 100. On the road section at the road construction site 325, the lane markings 321, 322, and 323 are broken and cannot be detected by the video camera 111. Therefore, the lane keeping system would stop working properly as soon as the vehicle 100 reaches the road construction site 325.

In Figure 3B, if function recommendation would be based on verifying static requirements, the outcome of the function recommendation would be the same as in Figure 3A. In particular, the video camera 111 detects line markings 312, 322, 323 directly in front of the vehicle 100 and therefore activating of LKS may be recommended based on static requirements. However, according to the method described of this invention, function recommendation is based on context information. For the embodiment of Figure 3B, it is assumed that based on the context information, which is different from the context information of Figure 3B, due to the different geographic location, the recommendation model RM classifies the lane keeping system as member of the second group. That is, the LKS is not classified as qualified for recommendation. Instead, the recommendation model RM may classify the cruise control function of vehicle 100 as qualified for recommendation in the present context.

In other words, the inventive method enables that LKS is not recommended in Figure 3B while LKS is recommended in Figure 3A, although both settings appear similar from the vehicle's immediate perspective. The reason is that, in the embodiment of Figure 3B, the recommendation model is trained to not recommend LKS due to the road construction site 325. The training may have been based on event datasets created by drivers traversing the road construction site 325 with deactivated LKS.

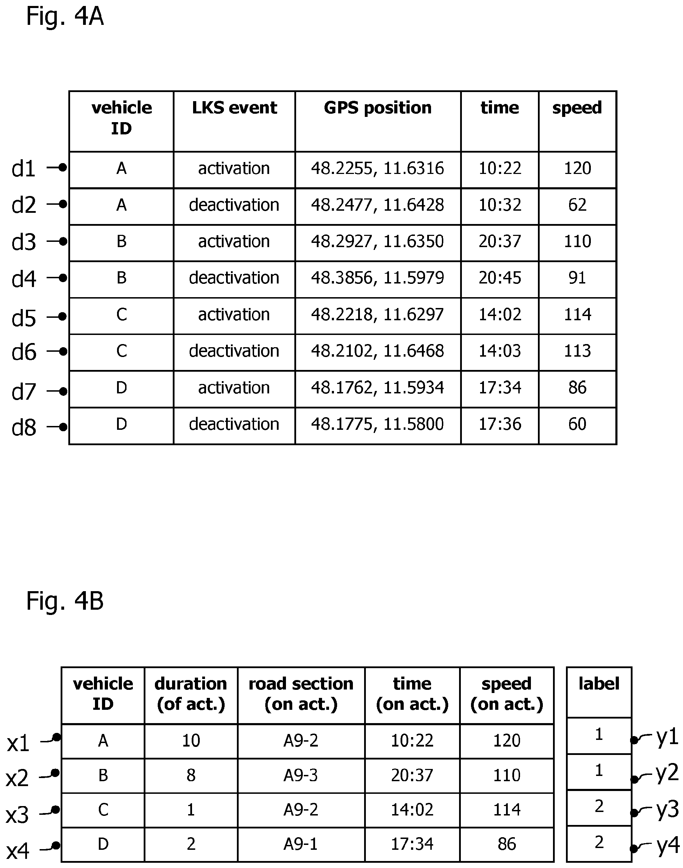

Figure 4A shows event datasets d1,...,d8 according to one embodiment. The event datasets d1,...,d8 are indicative of event information with respect to activations or deactivations of the LKS in four different vehicles, the vehicles being identified by vehicle IDs A, B, C, and D. Moreover, the event datasets d1,...,d8 are indicative of context information associated with the activation or deactivation events.

In particular, event dataset d1 indicates that in the vehicle A, the LKS has been activated at time 10:22 at a speed of 120 km/h at the GPS location "48.2255, 11.6316". Event dataset d2 indicates that the LKS has been deactivated in the same vehicle at time 10:32 at a speed of 62 km/h at the GPS location "48.2477, 11.6428".

Figure 4B shows training datasets x1,...,x4 generated using the event datasets d1,...d8. In particular,

- training dataset x1 is generated using event datasets d1 and d2;
- training dataset x2 is generated using event datasets d3 and d4;
- training dataset x3 is generated using event datasets d5 and d6;
- training dataset x4 is generated using event datasets d7 and d8.

The training datasets x1,...,x4 comprise

- the vehicle ID;
- the activation duration of LKS (derived by subtraction of activation time from deactivation time of the corresponding event datasets);
- the road section on activation of LKS (derived by the GPS position of the corresponding event datasets); and
- context information related to the activation (time on activation, speed on activation).

As can be seen in Figure 4B, training datasets x1 and x2 are indicative of situations where the activation duration is comparably long (exceeding 3 minutes) which can be seen as an indicator for a supportive experience for the driver. In contrast, training datasets x3 and x4 are indicative of situations where the activation duration is comparably short (less than 3 minutes) which indicates that the driver deactivated the LKS shortly after activation.

Moreover, Figure 4B shows labels y1,...,y4 assigned to training datasets x1,...,x4, respectively. According to this embodiment, training datasets having an activation duration of more than 3 minutes have been assigned label "1", otherwise label "2". In particular, label "1" is assigned to training datasets x1 and x2 and classifies training datasets x1 and x2 as members of the first group. Label "2" is assigned to training datasets x3 and x4 and classifies training datasets x3 and x4 as members of the second group.

This way, training datasets x1 and x2 in connection with the labels y1 and y2 can be used to train the recommendation model RM such that context information similar to the context information of training datasets x1 and x2 are classified as members of the first group. In other words, the recommendation model RM is trained to recommend activation of LKS in contexts similar to the contexts of training datasets x1 and x2.

It will be understood that, while various aspects of the present disclosure have been illustrated and described by way of example, the invention described herein is not limited thereto, but may be otherwise variously embodied as suggested by the disclosure.

In particular, the method for providing a function recommendation can be adapted in a way that instead of considering activation contexts of anonymous vehicles, the activation context can be related to a specific driver of a vehicle. This way, it is possible to personalize the classification of the recommendation model, which leads to improved function recommendations as the recommendation model can be trained to the specific preferences of a driver.

Moreover, the classification of context information into two groups has to be seen as an example only and more complex classifications, in particular for implementing rankings of functions, can be realized in a similar way.

Additionally, it should be noted that the methods and systems disclosed herein enable to improve the recommendation model on an iterative basis. In particular, starting from an initial recommendation model provided by a server, event data indicative of functions activations or deactivations can be continuously monitored and used to generate training data for updating the recommendation model by further training. This way, the event data can serve as feedback for previous function recommendations. The updated recommendation model can then be provided to the vehicle, such that drivers can benefit from the improved recommendation model. In particular, such updates can be provided on a regular basis.

List of reference signs

| | |
|---|---|
| 100 | vehicle |
| 110 | interior |
| 111 | video camera |
| 112 | head-up display |
| 113 | control button |
| 120 | computing unit |
| 130 | storage unit |
| 140 | communication unit |
| 150 | GPS module |

| 200 | server |
| 310, 320 | lane |
| 311-313 | lane marking |
| 321-313 | lane marking |
| 325 | road construction site |
| d1,...d8 | event dataset |
| x1,...,x4 | training dataset |
| y1,...,y4 | label |
| C | context information |
| F | (vehicle) function |
| RM | recommendation model |
| S1 | step of loading the recommendation model |
| S2 | step of receiving context information |
| S3 | step of determining a function |
| S4 | step of providing the function recommendation |

**Claims**

1. A computer-implemented method for providing a function recommendation in a vehicle (100), the method comprising the following steps:

   - loading a recommendation model (RM), wherein the recommendation model (RM) comprises at least one artificial neural network and preferably uses at least one random forest model;
   - receiving context information (C) acquired by using at least one sensor (111) of the vehicle (100), the context information (C) in particular comprising a geographical location of the vehicle;
   - determining a function (F), in particular a vehicle function, using the context information (C) and the recommendation model (RM), wherein the recommendation model (RM) classifies the context information (C) as member of a first group or member of a second group with respect to a respective function (F);
   - providing a function recommendation associated with the function (F), in particular using a display (112) and/or a voice assistant of the vehicle (100)
   wherein the method further comprises:

      - determining a road section based on the geographical location of the vehicle (100); and

   the determining of the function (F) further uses at least one key performance indicator of the determined road section, wherein the at least one key performance indicator is a numerical value associated with a respective function (F) and is one of the following:

$$\text{activation ratio} = \text{n\_activation} / \text{n\_traversals;}$$

   and

$$\text{deactivation ratio} = \text{n\_deactivation} / \text{n\_activeTraversals,}$$

   wherein
   n_activation denotes a total number of function activations on the road section,
   n_deactivation denotes a total number of function deactivations on the road section;
   n_traversals denotes a total number of traversals of the road section; and
   n_activeTraversals denotes a total number of traversals of the road section with activated function.

2. The method according to Claim 1,
   wherein the context information (C) comprises at least one piece of information indicative of: a time and/or date, a driving speed, a road property, a weather condition, a number of passengers in the vehicle (100), a mileage of the vehicle, a time expired since start of the trip, a standard deviation of a driving speed.

3. The method according to any of the preceding claims,

wherein the function (F) is a vehicle function of the vehicle (100) and one of: cruise control, adaptive cruise control, lane keeping system, lane departure warning, lane change assistance, automatic parking, crosswind stabilization.

4. The method according to any of the preceding claims,
wherein providing the function recommendation comprises:

- displaying an activation incentive on a display (112) of the vehicle (100);
- playing a sound on a speaker of the vehicle (100);
- using a voice assistant of the vehicle (100); and/or
- modifying programming of a control element (113) such that operating the control element (113) causes sending a control command for activating the function (F).

5. The method according to any of the preceding claims,
wherein the method further comprises:

- creating an event dataset (d1,...d8) comprising context information (C) and event information, wherein the event information comprises a function (F), a binary value indicative of an activation or deactivation event of the function (F), and a timestamp associated with the activation or deactivation event;
- sending the event dataset (d1,...d8) to a server (200), in particular using a communication unit (140) of the vehicle (100).

6. A computer readable medium (130) storing instructions that when executed by at least one processor cause the at least one processor to implement a method according to any of the preceding claims.

7. A vehicle (100) comprising:

- at least one sensor (111), in particular a position determination unit (150), in particular a GPS module;
- a computer readable medium (130) according to Claim 6;
- a vehicle computing unit (120);

wherein the vehicle computing unit (120) is adapted to

a) acquire at least one signal of the at least one sensor (111);
b) determine context information based on the acquired signal for feeding to the recommendation model (RM);
c) receive the recommendation indicating a function (F) to be used and being determined based on an output of the recommendation model (RM), the recommendation model (RM) in particular being stored on a server (200);
d) use the recommendation to adapt the functionality of the vehicle (100).

8. The vehicle (100) according to Claim 7,
wherein the vehicle (100) further comprises a programmable control element (113), in particular a control button, and the vehicle computing unit (120) is further adapted to modify programming of the control element (113) such that operating the control element (113) causes sending a control command for activating the function (F).

9. A system for providing a function recommendation in a vehicle (100), the system comprising:

- a server (200) configured to store a recommendation model (RM) and/or to train the recommendation model (RM); and
- a vehicle (100) according to any one of Claims 7 - 8, wherein a communication unit (140) of the vehicle (100) is configured to

a) receive the recommendation model (RM) and/or a function (F) from the server (200) and/or
b) to send context information (C) and/or event datasets (d1,...,d8) to the server (200).

**Patentansprüche**

1. Computerimplementiertes Verfahren zum Bereitstellen einer Funktionsempfehlung in einem Fahrzeug (100), wobei das Verfahren die folgenden Schritte umfasst:

• Laden eines Empfehlungsmodells (RM), wobei das Empfehlungsmodell (RM) mindestens ein künstliches neuronales Netzwerk umfasst und vorzugsweise mindestens ein Random-Forest-Modell verwendet;
• Empfangen von Kontextinformationen (C), die unter Verwendung mindestens eines Sensors (111) des Fahrzeugs (100) erfasst wurden, wobei die Kontextinformationen (C) insbesondere einen geografischen Ort des Fahrzeugs umfassen;
• Bestimmen einer Funktion (F), insbesondere einer Fahrzeugfunktion, unter Verwendung der Kontextinformationen (C) und des Empfehlungsmodells (RM), wobei das Empfehlungsmodell (RM) die Kontextinformationen (C) in Bezug auf eine jeweilige Funktion (F) als Mitglied einer ersten Gruppe oder Mitglied einer zweiten Gruppe klassifiziert;
• Bereitstellen einer Funktionsempfehlung, die mit der Funktion (F) verbunden ist, insbesondere unter Verwendung einer Anzeige (112) und/oder eines Sprachassistenten des Fahrzeugs (100),
wobei das Verfahren ferner umfasst:

• Bestimmen eines Straßenabschnitts basierend auf dem geografischen Ort des Fahrzeugs (100); und

das Bestimmen der Funktion (F) ferner mindestens einen Leistungskennwert des bestimmten Straßenabschnitts verwendet, wobei der mindestens eine Leistungskennwert ein numerischer Wert ist, der einer jeweiligen Funktion (F) zugeordnet ist, und einer der folgenden ist:

$$\text{Aktivierungsverhältnis} = n\_activation\ /\ n\_traversals;$$

und

$$\text{Deaktivierungsverhältnis} = n\_deactivation\ /\ n\_activeTraversals,$$

wobei
n_activation eine Gesamtanzahl von Funktionsaktivierungen auf dem Straßenabschnitt bezeichnet,
n_deactivation eine Gesamtanzahl von Funktionsdeaktivierungen auf dem Straßenabschnitt bezeichnet;
n_traversals eine Gesamtanzahl von Durchfahrten des Straßenabschnitts bezeichnet; und
n_activeTraversals eine Gesamtanzahl von Durchfahrten des Straßenabschnitts mit aktivierter Funktion bezeichnet.

2. Verfahren nach Anspruch 1,
wobei die Kontextinformationen (C) mindestens eine Information umfassen, die Folgendes anzeigt: eine Zeit und/oder ein Datum, eine Fahrgeschwindigkeit, eine Straßeneigenschaft, eine Wetterbedingung, eine Anzahl von Passagieren in dem Fahrzeug (100), eine Laufleistung des Fahrzeugs, eine seit Beginn der Fahrt verstrichene Zeit, eine Standardabweichung einer Fahrgeschwindigkeit.

3. Verfahren nach einem der vorhergehenden Ansprüche,
wobei die Funktion (F) eine Fahrzeugfunktion des Fahrzeugs (100) ist und eine der folgenden ist: Geschwindigkeitsregelanlage, adaptive Geschwindigkeitsregelanlage, Spurhaltesystem, Spurverlassenswarnung, Spurwechselassistent, automatisches Parken, Seitenwindstabilisierung.

4. Verfahren nach einem der vorhergehenden Ansprüche,
wobei das Bereitstellen der Funktionsempfehlung umfasst:

• Anzeigen eines Aktivierungsanreizes auf einer Anzeige (112) des Fahrzeugs (100);
• Abspielen eines Tons auf einem Lautsprecher des Fahrzeugs (100);
• Verwenden eines Sprachassistenten des Fahrzeugs (100); und/oder
• Modifizieren einer Programmierung eines Steuerelements (113) derart, dass eine Betätigung des Steuerelements (113) ein Senden eines Steuerbefehls zum Aktivieren der Funktion (F) bewirkt.

5. Verfahren nach einem der vorhergehenden Ansprüche,
wobei das Verfahren ferner umfasst:

• Erstellen eines Ereignisdatensatzes (d1,...d8), der Kontextinformationen (C) und Ereignisinformationen umfasst, wobei die Ereignisinformationen eine Funktion (F), einen Binärwert, der ein Aktivierungs- oder Deaktivierungsereignis der Funktion (F) anzeigt, und einen Zeitstempel umfassen, der dem Aktivierungs- oder Deaktivierungsereignis zugeordnet ist;

• Senden des Ereignisdatensatzes (d1,...d8) an einen Server (200), insbesondere unter Verwendung einer Kommunikationseinheit (140) des Fahrzeugs (100).

6. Computerlesbares Medium (130), das Anweisungen speichert, die, wenn sie von mindestens einem Prozessor ausgeführt werden, den mindestens einen Prozessor veranlassen, ein Verfahren nach einem der vorhergehenden Ansprüche zu implementieren.

7. Fahrzeug (100), umfassend:

• mindestens einen Sensor (111), insbesondere eine Positionsbestimmungseinheit (150), insbesondere ein GPS-Modul;
• ein computerlesbares Medium (130) nach Anspruch 6;
• eine Fahrzeugrecheneinheit (120);

wobei die Fahrzeugrecheneinheit (120) angepasst ist, um

a) mindestens ein Signal des mindestens einen Sensors (111) zu erfassen;
b) Kontextinformationen basierend auf dem erfassten Signal zum Zuführen an das Empfehlungsmodell (RM) zu bestimmen;
c) die Empfehlung zu empfangen, die eine zu verwendende Funktion (F) anzeigt und basierend auf einer Ausgabe des Empfehlungsmodells (RM) bestimmt wird, wobei das Empfehlungsmodell (RM) insbesondere auf einem Server (200) gespeichert ist;
d) die Empfehlung zu verwenden, um die Funktionalität des Fahrzeugs (100) anzupassen.

8. Fahrzeug (100) nach Anspruch 7,
wobei das Fahrzeug (100) ferner ein programmierbares Steuerelement (113), insbesondere einen Steuerknopf, umfasst, und die Fahrzeugrecheneinheit (120) ferner angepasst ist, um eine Programmierung des Steuerelements (113) derart zu modifizieren, dass eine Betätigung des Steuerelements (113) ein Senden eines Steuerbefehls zum Aktivieren der Funktion (F) bewirkt.

9. System zum Bereitstellen einer Funktionsempfehlung in einem Fahrzeug (100), wobei das System umfasst:

• einen Server (200), der dazu konfiguriert ist, ein Empfehlungsmodell (RM) zu speichern und/oder das Empfehlungsmodell (RM) zu trainieren; und
• ein Fahrzeug (100) nach einem der Ansprüche 7 - 8, wobei eine Kommunikationseinheit (140) des Fahrzeugs (100) konfiguriert ist, um

a) das Empfehlungsmodell (RM) und/oder eine Funktion (F) von dem Server (200) zu empfangen und/oder
b) Kontextinformationen (C) und/oder Ereignisdatensätze (d1,...,d8) an den Server (200) zu senden.

**Revendications**

1. Procédé mis en œuvre par ordinateur pour fournir une recommandation de fonction dans un véhicule (100), le procédé comprenant les étapes suivantes :

• charger un modèle de recommandation (RM), le modèle de recommandation (RM) comprenant au moins un réseau de neurones artificiel et utilisant de préférence au moins un modèle de forêt aléatoire ;
• recevoir des informations de contexte (C) acquises en utilisant au moins un capteur (111) du véhicule (100), les informations de contexte (C) comprenant en particulier un emplacement géographique du véhicule ;
• déterminer une fonction (F), en particulier une fonction de véhicule, en utilisant les informations de contexte (C) et le modèle de recommandation (RM), le modèle de recommandation (RM) classifiant les informations de contexte (C) comme membre d'un premier groupe ou membre d'un second groupe par rapport à une fonction respective (F) ;
• fournir une recommandation de fonction associée à la fonction (F), en particulier en utilisant un affichage (112) et/ou un assistant vocal du véhicule (100),
le procédé comprenant en outre :

• déterminer une section de route sur la base de l'emplacement géographique du véhicule (100) ; et

la détermination de la fonction (F) utilise en outre au moins un indicateur de performance clé de la section de route déterminée, l'au moins un indicateur de performance clé étant une valeur numérique associée à une fonction respective (F) et étant l'un des suivants :

$$\text{rapport d'activation} = \text{n\_activation} / \text{n\_traversals} ;$$

et

$$\text{rapport de désactivation} = \text{n\_deactivation} / \text{n\_activeTraversals},$$

où
n_activation désigne un nombre total d'activations de fonction sur la section de route,
n_deactivation désigne un nombre total de désactivations de fonction sur la section de route ;
n_traversals désigne un nombre total de traversées de la section de route ; et
n_activeTraversals désigne un nombre total de traversées de la section de route avec fonction activée.

2. Procédé selon la revendication 1,
dans lequel les informations de contexte (C) comprennent au moins une information indicative de : une heure et/ou une date, une vitesse de conduite, une propriété de route, une condition météorologique, un nombre de passagers dans le véhicule (100), un kilométrage du véhicule, un temps écoulé depuis le début du trajet, un écart-type d'une vitesse de conduite.

3. Procédé selon l'une quelconque des revendications précédentes,
dans lequel la fonction (F) est une fonction de véhicule du véhicule (100) et l'une des suivantes : régulateur de vitesse, régulateur de vitesse adaptatif, système de maintien de voie, avertissement de franchissement de ligne, assistance au changement de voie, stationnement automatique, stabilisation de vent latéral.

4. Procédé selon l'une quelconque des revendications précédentes,
dans lequel la fourniture de la recommandation de fonction comprend :

• afficher une incitation à l'activation sur un affichage (112) du véhicule (100) ;
• jouer un son sur un haut-parleur du véhicule (100) ;
• utiliser un assistant vocal du véhicule (100) ; et/ou
• modifier une programmation d'un élément de commande (113) de telle sorte que l'actionnement de l'élément de commande (113) provoque l'envoi d'une commande de commande pour activer la fonction (F).

5. Procédé selon l'une quelconque des revendications précédentes,
dans lequel le procédé comprend en outre :

• créer un ensemble de données d'événement (d1,...d8) comprenant des informations de contexte (C) et des informations d'événement, les informations d'événement comprenant une fonction (F), une valeur binaire indicative d'un événement d'activation ou de désactivation de la fonction (F), et un horodatage associé à l'événement d'activation ou de désactivation ;
• envoyer l'ensemble de données d'événement (d1,...d8) à un serveur (200), en particulier en utilisant une unité de communication (140) du véhicule (100).

6. Support lisible par ordinateur (130) stockant des instructions qui, lorsqu'elles sont exécutées par au moins un processeur, amènent l'au moins un processeur à mettre en œuvre un procédé selon l'une quelconque des revendications précédentes.

7. Véhicule (100) comprenant :

• au moins un capteur (111), en particulier une unité de détermination de position (150), en particulier un module GPS ;
• un support lisible par ordinateur (130) selon la revendication 6 ;
• une unité de calcul de véhicule (120) ;

dans lequel l'unité de calcul de véhicule (120) est adaptée pour

a) acquérir au moins un signal de l'au moins un capteur (111) ;
b) déterminer des informations de contexte sur la base du signal acquis pour alimenter le modèle de recommandation (RM) ;
c) recevoir la recommandation indiquant une fonction (F) à utiliser et étant déterminée sur la base d'une sortie du modèle de recommandation (RM), le modèle de recommandation (RM) étant en particulier stocké sur un serveur (200) ;
d) utiliser la recommandation pour adapter la fonctionnalité du véhicule (100).

8. Véhicule (100) selon la revendication 7,
dans lequel le véhicule (100) comprend en outre un élément de commande programmable (113), en particulier un bouton de commande, et l'unité de calcul de véhicule (120) est en outre adaptée pour modifier une programmation de l'élément de commande (113) de telle sorte que l'actionnement de l'élément de commande (113) provoque l'envoi d'une commande de commande pour activer la fonction (F).

9. Système pour fournir une recommandation de fonction dans un véhicule (100), le système comprenant :

• un serveur (200) configuré pour stocker un modèle de recommandation (RM) et/ou pour entraîner le modèle de recommandation (RM) ; et
• un véhicule (100) selon l'une des revendications 7 - 8, dans lequel une unité de communication (140) du véhicule (100) est configurée pour

a) recevoir le modèle de recommandation (RM) et/ou une fonction (F) du serveur (200) et/ou
b) envoyer des informations de contexte (C) et/ou des ensembles de données d'événement (d1,...,d8) au serveur (200).

Fig. 1A

Fig. 1B

Fig. 2

```
        ┌─────────────────────┐
        │         S1          │
        └─────────────────────┘
                   │ [RM]
                   ▼
        ┌─────────────────────┐
        │         S2          │
        └─────────────────────┘
                   │ [C]
                   ▼
        ┌─────────────────────┐
        │         S3          │
        └─────────────────────┘
                   │ [F]
                   ▼
        ┌─────────────────────┐
        │         S4          │
        └─────────────────────┘
```

Fig. 3A

Fig. 3B

## Fig. 4A

| | vehicle ID | LKS event | GPS position | time | speed |
|---|---|---|---|---|---|
| d1 → | A | activation | 48.2255, 11.6316 | 10:22 | 120 |
| d2 → | A | deactivation | 48.2477, 11.6428 | 10:32 | 62 |
| d3 → | B | activation | 48.2927, 11.6350 | 20:37 | 110 |
| d4 → | B | deactivation | 48.3856, 11.5979 | 20:45 | 91 |
| d5 → | C | activation | 48.2218, 11.6297 | 14:02 | 114 |
| d6 → | C | deactivation | 48.2102, 11.6468 | 14:03 | 113 |
| d7 → | D | activation | 48.1762, 11.5934 | 17:34 | 86 |
| d8 → | D | deactivation | 48.1775, 11.5800 | 17:36 | 60 |

## Fig. 4B

| | vehicle ID | duration (of act.) | road section (on act.) | time (on act.) | speed (on act.) | label | |
|---|---|---|---|---|---|---|---|
| x1 → | A | 10 | A9-2 | 10:22 | 120 | 1 | → y1 |
| x2 → | B | 8 | A9-3 | 20:37 | 110 | 1 | → y2 |
| x3 → | C | 1 | A9-2 | 14:02 | 114 | 2 | → y3 |
| x4 → | D | 2 | A9-1 | 17:34 | 86 | 2 | → y4 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170151945 A1
- FR 3105142 A1
- WO 2020160799 A1
- DE 102014221132 A1
- DE 102018206557 A1